# EUROPEAN PATENT SPECIFICATION

(11) **EP 4 438 233 B1**
(45) Date of publication and mention of the grant of the patent: **30.07.2025**
(21) Application number: 24154304.0
(22) Date of filing: 29.01.2024
(51) Int. Cl.: B25F 5/00, B27G 19/04

(54) **POWER TOOL**
ELEKTROWERKZEUG
OUTIL ÉLECTRIQUE

(30) Priority: 29.03.2023 CN 202310323539
(43) Date of publication of application: 02.10.2024
(73) Proprietor: Nanjing Chervon Industry Co., Ltd., Nanjing, Jiangsu 211106 (CN)
(72) Inventor: ZHANG, Yinghao, Nanjing (CN); ZHENG, Shutao, Nanjing (CN)
(74) Representative: Sun, Yiming

(56) References cited:
- EP-A1- 3 150 338
- CN-A- 115 580 200
- US-A1- 2017 304 976
- US-A1- 2021 291 400

## Description

### TECHNICAL FIELD

The present invention relates to the field of electronic technologies and, in particular, to a power tool.

### BACKGROUND

Power tools such as a miter saw or an angle grinder have relatively high inertia. Therefore, the motor of this type of power tool coasts for a relatively long time after power-off. If a user turns on a switch and the power tool is powered again during the coast time of the motor after the power-off, the power tool may be caused to run again, thus causing a great security risk to an unprepared person near the power tool.

This part provides background information related to the present invention, which is not necessarily the existing art.

Document CN 115580200A discloses an electric tool according to the preamble of claim 1 and a driving control circuit thereof, and the tool comprises a power interface which is used for connecting a power supply; the motor is used for providing power for the electric tool; the controller is at least connected with the motor so as to control the working state of the motor; the multipath control circuit comprises a control switch triggered by a user and a switch element electrically connected with the control switch.

Document EP3150338A1 discloses an electric tool, a motor assembly and a motor drive system. The motor drive system includes a trigger switch, an electronic switch, and a switch control circuit connected between the trigger switch and the electronic switch. The trigger switch is connected in series to a power supply. The electronic switch is configured to control a motor to be powered on or powered off.

Document US 20170304976A1 discloses an electric working machine comprising a motor, a switch, a drive device, a brake device, and a failure determiner.

Document US 2021291400A1 discloses a hand-portable garden, forestry and/or construction processing device has a cutting tool, an electric drive motor, a motor operating element, and a control device.

### SUMMARY

The present invention aims to solve or at least alleviate all or part of the preceding problems. Therefore, an object of the present invention is to provide a power tool and a power-off protection method thereof. The present invention is defined by the independent claim. Advantageous embodiments are described in the dependent claims, the following description and the drawings.

The present invention has the following benefit: the power-off protection method provided by the present invention improves the security performance of the power tool.

### BRIEF DESCRIPTION OF DRAWINGS

FIG. 1 is a perspective view of a power tool according to an example of the present invention;
FIG. 2 is a block diagram of a power-off protection circuit of a power tool according to an example of the present invention; and
FIG. 3 is a flowchart of a power-off protection method of a power tool according to an example of the present invention.

### DETAILED DESCRIPTION

Before any examples of this invention are explained in detail, it is to be understood that this invention is not limited to its invention to the structural details and the arrangement of components set forth in the following description or illustrated in the above drawings.

In this invention, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this invention, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this invention generally indicates that the contextual associated objects belong to an "and/or" relationship.

In this invention, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this invention, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this invention, those skilled in the art will understand that a function performed by an assembly may be performed by one assembly, multiple assemblies, one member, or multiple members. Likewise, a function performed by a member may be performed by one member, an assembly, or a combination of members.

In this invention, the terms "up", "down", "left", "right", "front", and "rear" " and other directional words are described based on the orientation or positional relationship shown in the drawings, and should not be understood as limitations to the examples of this invention. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this invention, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this invention, the term "device", "module" or "unit" may be implemented in the form of hardware or software to achieve specific functions.

In this invention, the terms "computing", "judging", "controlling", "determining", "recognizing" and the like refer to the operations and processes of a computer system or similar electronic computing device (e.g., controller, processor, etc.).

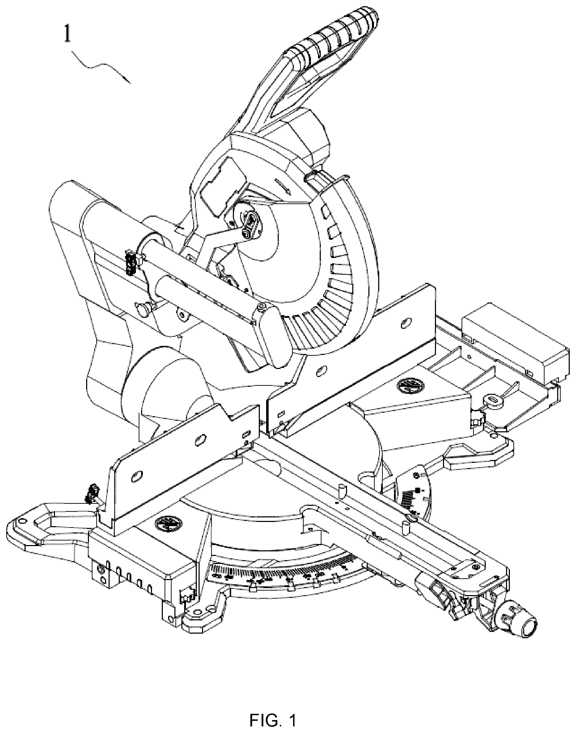

FIG. 1 shows a power tool according to an example of the present invention, where the power tool is a miter saw. It is to be understood by those skilled in the art that the power tool provided by the present invention is not limited to the miter saw and may be a table saw, an angle grinder, an electric drill, a chain saw, a string trimmer, or the like.

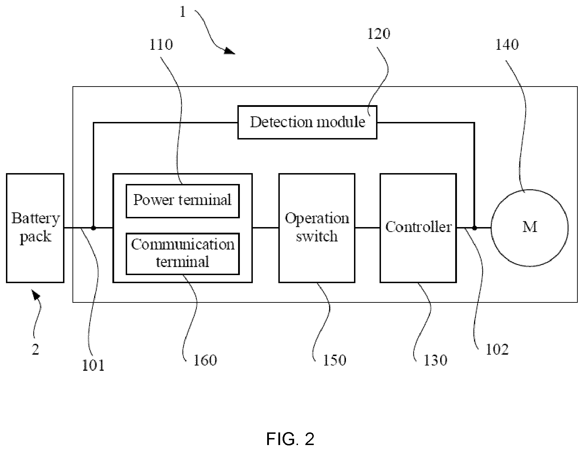

FIG. 2 is a block diagram of a power-off protection circuit of a power tool according to an example of the present invention. Referring to FIG. 2, a power tool 1 includes a power terminal 110, a detection module 120, a controller 130, and a motor 140. The motor 140 may be a brushless motor. The power terminal 110 is configured to be electrically connected to a battery pack 2 to access a power supply of the battery pack 2. A circuit between the power terminal 110 and the battery pack 2 is a first circuit 101, and a circuit between the power terminal 110 and the motor 140 is a second circuit 102. The detection module 120 can detect that the first circuit 101 and the second circuit 102 are in a power-on mode or a power-off mode. The controller 130 can control the second circuit 102 to be in the power-on mode or the power-off mode.

When the first circuit 101 is in the power-on mode, the power supply of the battery pack 2 can be supplied to the power tool 1, that is, the battery pack 2 is in good contact with an electrical connection structure of the power tool 1. When the first circuit 101 is in the power-off mode, that is, the battery pack 2 is not electrically connected to the power tool 1, for example, the battery pack 2 is separated from the power tool 1, the power supply of the battery pack 2 cannot be supplied to the power tool 1. In some examples, the battery pack 2 is plugged into the power tool 1, where the first circuit 101 is in the power-on mode when the battery pack 2 is plugged into the power tool 1, and the first circuit 101 is in the power-off mode when the battery pack 2 is pulled out of the power tool 1.

When the second circuit 102 is in the power-on mode, a power supply received by the power terminal 110 from the battery pack 2 can be delivered to the motor 140 so that the motor 140 can rotate. When the second circuit 102 is in the power-off mode, the power supply received by the power terminal 110 from the battery pack 2 cannot be delivered to the motor 140 so that the motor 140 stops rotating or keeps still.

The power tool 1 further includes an operation switch 150 disposed between the power terminal 110 and the motor 140. The operation switch 150 can control the second circuit 102 to be in the power-off mode or control, through the controller 130, the second circuit 102 to be in the power-on mode. In some examples, the operation switch 150 can be moved between a first position and a second position. When the operation switch 150 is at the first position, the operation switch 150 is in the off state, and when the operation switch 150 is at the second position, the operation switch 150 is in the on state. When the operation switch 150 is in the off state, the second circuit 102 is in the power-off mode. When the operation switch 150 is in the on state, the controller 130 can control the second circuit 102 to be in the power-on mode.

In some examples, if the operation switch 150 can directly control whether the second circuit 102 is in the power-on mode, a relatively high security risk is caused. For example, the operation of safely replacing the battery pack 2 should be as follows: the operation switch 150 is turned off so that the second circuit 102 is in the power-off mode, next, the battery pack 2 is pulled out so that the first circuit 101 is in the power-off mode, then another battery pack 2 is plugged so that the first circuit 101 is restored to the power-on mode but the operation switch 150 is kept in the off state so that the second circuit 102 is in the power-off mode, and when a user needs to work by using the power tool 1, the operation switch 150 is turned on so that the second circuit 102 is switched from the power-off mode to the power-on mode. In some scenarios, the user may replace the battery pack 2 in violation of regulations: when the operation switch 150 is in the on state, the battery pack 2 is directly pulled out and then another battery pack 2 is plugged. In the replacement process, the second circuit 102 is always in the power-on mode, and when the first circuit 101 is restored to the power-on mode, the power supply of the battery pack 2 can be quickly delivered to the motor 140 through the first circuit 101 and the second circuit 102 so that the motor 140 in a coast state is driven to rotate again (after the power supply is stopped, the motor 140 does not stop rotating immediately but coasts for a period of time under the action of inertia). Power tools such as the miter saw or the angle grinder have relatively high inertia. Therefore, the motor 140 of this type of power tool 1 coasts for a relatively long time after the power-off. If the operation switch 150 is kept in the on state when the user replaces the battery pack 2 of the miter saw, the motor 140 of the miter saw into which the battery pack 2 is plugged again is started in the coast state, and a saw blade is driven to rotate quickly and may hurt an unprepared person near the miter saw.

To resolve the preceding security risk, the present invention provides an example. In this example, when the detection module 120 detects that the first circuit 101 is switched from the power-on mode to the power-off mode, the controller 130 controls the second circuit 102 to be in the power-off mode within a first preset time. The first preset time is greater than or equal to a coast time of the motor 140. Specifically, the first preset time may be 2 seconds, 5 seconds, or 10 seconds.

In this example, after the battery pack 2 is pulled out of the power tool 1, the controller 130 controls the second circuit 102 to be in the power-off mode within the first preset time so that the case is avoided where the motor 140 is powered on again immediately after the power-off so as to drive a working accessory to rotate quickly. Thus, the security risk of the power tool 1 is reduced.

In this example, even if the detection module 120 detects, within the first preset time, that the first circuit 101 is switched from the power-off mode to the power-on mode, the controller 130 still controls the second circuit 102 to be in the power-off mode within the first preset time. The controller 130 controls the second circuit 102 to be in the power-on mode only when the detection module 120 detects, outside the first preset time, that the first circuit 101 is in the power-on mode.

In some examples, the operation switch 150 is configured to be incapable of directly controlling the second circuit 102 to be switched from the power-off mode to the power-on mode, and the operation switch 150 needs to control, through the controller 130, the second circuit 102 to be switched to the power-on mode. For example, after the battery pack 2 is pulled out of the power tool 1, the controller 130 controls the second circuit 102 to be in the power-off mode within the first preset time. Even if the operation switch 150 is always in the on state within the first preset time or is switched from the off state to the on state, the controller 130 still controls the second circuit 102 to be in the power-off mode within the first preset time. The controller 130 controls the second circuit 102 to be in the power-on mode only when the detection module 120 detects, outside the first preset time, that the first circuit 101 is in the power-on mode and the operation switch 150 is in the on state outside the first preset time.

The power tool 1 further includes a communication terminal 160, and the communication terminal 160 performs data communication with the battery pack 2. When the battery pack 2 is pulled out of the power tool 1, the first circuit 101 is switched from the power-on mode to the power-off mode, no data communication occurs between the communication terminal 160 and the battery pack 2, and a level of the communication terminal 160 keeps stable. Therefore, the detection module 130 can assist in determining, by detecting whether the level of the communication terminal 160 varies, whether the battery pack 2 is not electrically connected to the power tool 1, that is, the detection module 130 can determine, based on whether the level of the communication terminal 160 varies, that the first circuit 101 is in the power-on mode or the power-off mode.

After the battery pack 2 is pulled out of the power tool 1, the first circuit 101 is switched from the power-on mode to the power-off mode. However, the motor 140 does not immediately stop rotating. Instead, the motor 140 coasts for a period of time under the action of the inertia. The motor 140 generates a back electromotive force in the coast state. Therefore, a small current is generated. Therefore, the detection module 130 can assist in determining, by detecting the magnitude of the phase current of the motor, whether the battery pack 2 is not electrically connected to the power tool 1, that is, the detection module 130 can determine, based on the magnitude of the phase current of the motor 140, that the first circuit 101 is in the power-on mode or the power-off mode.

In summary, the present invention provides an example in which it can be determined, in a relatively accurate manner, whether the first circuit 101 is switched from the power-on mode to the power-off mode. In this example, the detection module 120 can detect whether the level of the communication terminal 160 varies, and the detection module 120 can further detect the phase current of the motor 140. When the absolute value of the phase current of the motor 140 is less than a preset current threshold and the level of the communication terminal 160 does not vary within a second preset time, the detection module 120 determines that the first circuit 101 is in the power-off mode.

The present invention further provides an example in which it can be determined whether the first circuit 101 is switched from the power-on mode to the power-off mode. The detection module 120 can detect the back electromotive force of the motor 140 and the bus voltage of the motor 140. When the difference between the back electromotive force of the motor 140 and the bus voltage of the motor 140 is less than a preset voltage threshold within a third preset time, the detection module 120 determines that the first circuit 101 is in the power-off mode. In some examples, the product of a current of the unloaded motor 140 and an internal resistance of the motor 140 may be calculated and used as a basis for a value range of the preset voltage threshold.

To resolve the security risk mentioned above, the present invention further provides another example. In this example, when the detection module 120 detects that the first circuit 101 is switched from the power-off mode to the power-on mode, the controller 30 controls the second circuit 102 based on a time when the first circuit 101 is in the power-off mode before the mode switchover. If the time when the first circuit 101 is in the power-off mode before the mode switchover does not exceed the first preset time, the second circuit 102 is controlled to be in the power-off mode. Optionally, the first preset time may be greater than or equal to 2 seconds and less than or equal to 10 seconds.

In some examples, if the time when the first circuit 101 is in the power-off mode before the mode switchover has exceeded the first preset time, the controller 30 may control the second circuit 102 to be in the power-on mode.

In some examples, the operation switch 150 is configured to be incapable of directly controlling the second circuit 102 to be switched from the power-off mode to the power-on mode, and the operation switch 150 needs to control, through the controller 130, the second circuit 102 to be switched to the power-on mode. When the detection module 120 detects that the first circuit 101 is switched from the power-off mode to the power-on mode, the controller 30 controls the second circuit 102 to be in the power-off mode if the operation switch 150 is in the on mode and the time when the first circuit 101 is in the power-off mode before the mode switchover does not exceed the first preset time.

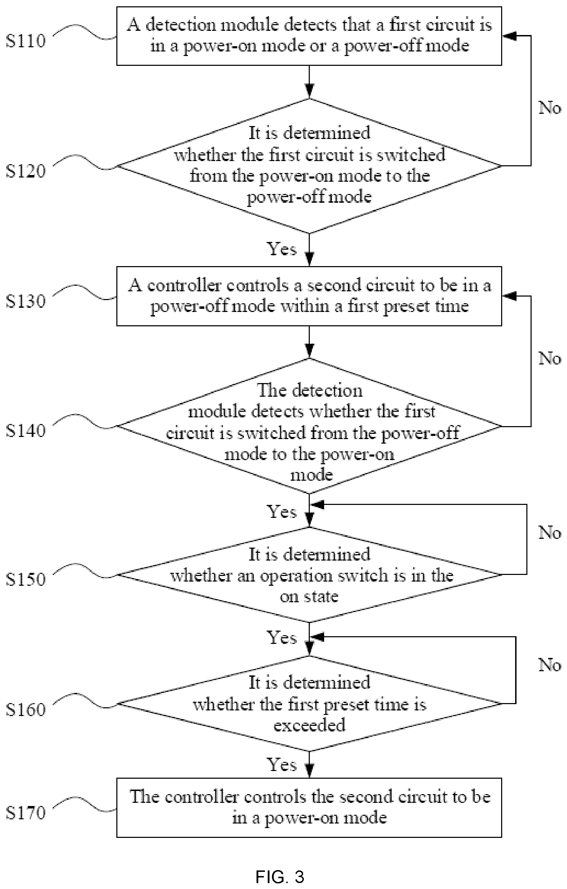

As shown in FIG. 3, the present invention further provides a power-off protection method applicable to the power tool 1 such as the miter saw. The power tool 1 includes the motor 140, the power terminal 110, the detection module 120, the controller 130, and the operation switch 150 as mentioned in the preceding example. The power-off protection method includes the steps below.

In S110, the detection module 120 detects that the first circuit 101 is in the power-on mode or the power-off mode.

In S120, it is determined whether the first circuit 101 is switched from the power-on mode to the power-off mode. If yes, step S130 is performed. If not, the detection is continued.

In S130, the controller 140 controls the second circuit 102 to be in the power-off mode within the first preset time.

In S140, the detection module 120 detects whether the first circuit 101 is switched from the power-off mode to the power-on mode. If yes, step S150 is performed. If not, step S130 is performed.

In S150, it is determined whether the operation switch is in the on state. If yes, step S160 is performed. If not, it is continuously detected whether the operation switch is in the on state.

In S160, it is determined whether the first preset time is exceeded. If yes, step S170 is performed. If not, it is continuously detected whether the first preset time is exceeded.

In S170, the controller 140 controls the second circuit 102 to be in the power-on mode.

The preceding power-off protection method improves the security performance of the power tool 1.

The basic principles, main features, and advantages of this invention are shown and described above.

## Claims

1. A power tool (1), comprising:
a motor (140);
a power terminal (110) configured to access a power supply of a battery pack (2);
a detection module (120) capable of detecting that a first circuit (101) between the power terminal and the battery pack is in a power-on mode or a power-off mode; and
a controller (130) capable of controlling a second circuit (102) between the power terminal and the motor to be in a power-on mode or a power-off mode;
wherein the controller is configured to, when the detection module detects that the first circuit is switched from the power-on mode to the power-off mode, control the second circuit to be in the power-off mode within a first preset time,
**characterized in that**,
the first preset time is greater than or equal to a coast time of the motor, wherein the coast time is the period of time for which the motor does not stop rotating immediately but coasts under the action of inertia after the power supply is stopped.

2. The power tool according to claim 1, wherein the controller is configured to, when the detection module detects, within the first preset time, that the first circuit is in the power-on mode again, control the second circuit to be in the power-off mode within the first preset time.

3. The power tool according to claim 2, wherein the controller is configured to, when the detection module detects, outside the first preset time, that the first circuit is in the power-on mode, control the second circuit to be in the power-on mode.

4. The power tool according to claim 1, further comprising an operation switch (150) capable of controlling the second circuit to be in the power-on mode or the power-off mode, wherein the controller controls the second circuit to be in the power-off mode when the operation switch is in an off state.

5. The power tool according to claim 1, further comprising an operation switch (150) capable of controlling the second circuit to be in the power-on mode or the power-off mode, wherein the second circuit is in the power-off mode when the operation switch is in an off state, and the controller controls the second circuit to be in the power-on mode or the power-off mode when the operation switch is in an on state.

6. The power tool according to claim 4 or 5, wherein the controller is configured to, when the operation switch is in the on state within the first preset time and the detection module detects, within the first preset time, that the first circuit is in the power-on mode again, control the second circuit to be in the power-off mode within the first preset time.

7. The power tool according to claim 6, wherein the controller is configured to, when the operation switch is in the on state outside the first preset time and the detection module detects, outside the first preset time, that the first circuit is in the power-on mode, control the second circuit to be in the power-on mode.

8. The power tool according to claim 4 or 5, wherein the controller is configured to, when the operation switch is switched from the off state to the on state within the first preset time and the detection module detects, within the first preset time, that the first circuit is in the power-on mode again, control the second circuit to be in the power-off mode within the first preset time.

9. The power tool according to claim 1, further comprising a communication terminal (160) configured to perform data communication with the battery pack, wherein the detection module is capable of detecting whether a level of the communication terminal varies.

10. The power tool according to claim 9, wherein the detection module determines, based on whether the level of the communication terminal varies, that the first circuit is in the power-on mode or the power-off mode.

11. The power tool according to claim 10, wherein the detection module is also capable of detecting a phase current of the motor and determining, based on a magnitude of the phase current of the motor, that the first circuit is in the power-on mode or the power-off mode.

12. The power tool according to claim 9, wherein the detection module is also capable of detecting a phase current of the motor and is configured to, when an absolute value of the phase current of the motor is less than a preset current threshold and the level of the communication terminal does not vary within a second preset time, determine that the first circuit is in the power-off mode.

13. The power tool according to claim 1, wherein the detection module is also capable of detecting a back electromotive force of the motor and a bus voltage of the motor and is configured to, when a difference between the back electromotive force of the motor and the bus voltage of the motor is less than a preset voltage threshold within a third preset time, determine that the first circuit is in the power-off mode.

14. The power tool according to claim 1, wherein the battery pack is plugged to the power tool, the first circuit is in the power-on mode when the battery pack is plugged to the power tool, and the first circuit is in the power-off mode when the battery pack is pulled out of the power tool.

## Patentansprüche

1. Elektrowerkzeug (1), umfassend:
einen Motor (140);
einen Leistungsanschluss (110), der dazu konfiguriert ist, eine Stromversorgung eines Batteriepakets (2) zu nutzen;
ein Erfassungsmodul (120), das in der Lage ist zu erfassen, ob ein erster Stromkreis (101) zwischen dem Leistungsanschluss und dem Batteriepaket sich in einem eingeschalteten oder einem ausgeschalteten Zustand befindet; und
ein Steuergerät (130), das in der Lage ist, einen zweiten Stromkreis (102) zwischen dem Leistungsanschluss und dem Motor in einen eingeschalteten oder einen ausgeschalteten Zustand zu versetzen;
wobei das Steuergerät dazu konfiguriert ist, wenn das Erfassungsmodul erfasst, dass der erste Stromkreis vom eingeschalteten in den ausgeschalteten Zustand wechselt, den zweiten Stromkreis innerhalb einer ersten voreingestellten Zeit in den ausgeschalteten Zustand zu versetzen,
**dadurch gekennzeichnet, dass**
die erste voreingestellte Zeit größer oder gleich einer Auslaufzeit des Motors ist, wobei die Auslaufzeit der Zeitraum ist, in dem der Motor nach dem Abschalten der Stromversorgung aufgrund der Trägheit weiterläuft, ohne sofort anzuhalten.

2. Elektrowerkzeug nach Anspruch 1, wobei das Steuergerät dazu konfiguriert ist, wenn das Erfassungsmodul innerhalb der ersten voreingestellten Zeit erkennt, dass sich der erste Stromkreis erneut im eingeschalteten Zustand befindet, den zweiten Stromkreis innerhalb der ersten voreingestellten Zeit in den ausgeschalteten Zustand zu versetzen.

3. Elektrowerkzeug nach Anspruch 2, wobei das Steuergerät dazu konfiguriert ist, wenn das Erfassungsmodul außerhalb der ersten voreingestellten Zeit erkennt, dass sich der erste Stromkreis im eingeschalteten Zustand befindet, den zweiten Stromkreis in den eingeschalteten Zustand zu versetzen.

4. Elektrowerkzeug nach Anspruch 1, ferner umfassend einen Betätigungsschalter (150), der in der Lage ist, den zweiten Stromkreis in den eingeschalteten oder ausgeschalteten Zustand zu versetzen, wobei das Steuergerät den zweiten Stromkreis in den ausgeschalteten Zustand versetzt, wenn sich der Betätigungsschalter im Aus-Zustand befindet.

5. Elektrowerkzeug nach Anspruch 1, ferner umfassend einen Betätigungsschalter (150), der in der Lage ist, den zweiten Stromkreis in den eingeschalteten oder ausgeschalteten Zustand zu versetzen, wobei sich der zweite Stromkreis im ausgeschalteten Zustand befindet, wenn sich der Betätigungsschalter im Aus-Zustand befindet, und das Steuergerät den zweiten Stromkreis in den eingeschalteten oder ausgeschalteten Zustand versetzt, wenn sich der Betätigungsschalter im Ein-Zustand befindet.

6. Elektrowerkzeug nach Anspruch 4 oder 5, wobei das Steuergerät dazu konfiguriert ist, wenn sich der Betätigungsschalter innerhalb der ersten voreingestellten Zeit im Ein-Zustand befindet und das Erfassungsmodul innerhalb der ersten voreingestellten Zeit erkennt, dass sich der erste Stromkreis erneut im eingeschalteten Zustand befindet, den zweiten Stromkreis innerhalb der ersten voreingestellten Zeit in den ausgeschalteten Zustand zu versetzen.

7. Elektrowerkzeug nach Anspruch 6, wobei das Steuergerät dazu konfiguriert ist, wenn sich der Betätigungsschalter außerhalb der ersten voreingestellten Zeit im Ein-Zustand befindet und das Erfassungsmodul außerhalb der ersten voreingestellten Zeit erkennt, dass sich der erste Stromkreis im eingeschalteten Zustand befindet, den zweiten Stromkreis in den eingeschalteten Zustand zu versetzen.

8. Elektrowerkzeug nach Anspruch 4 oder 5, wobei das Steuergerät dazu konfiguriert ist, wenn der Betätigungsschalter innerhalb der ersten voreingestellten Zeit vom Aus-Zustand in den Ein-Zustand wechselt und das Erfassungsmodul innerhalb der ersten voreingestellten Zeit erkennt, dass sich der erste Stromkreis erneut im eingeschalteten Zustand befindet, den zweiten Stromkreis innerhalb der ersten voreingestellten Zeit in den ausgeschalteten Zustand zu versetzen.

9. Elektrowerkzeug nach Anspruch 1, ferner umfassend ein Kommunikationsanschluss (160), der dazu konfiguriert ist, eine Datenkommunikation mit dem Batteriepaket durchzuführen, wobei das Erfassungsmodul in der Lage ist zu erkennen, ob sich ein Pegel des Kommunikationsanschlusses ändert.

10. Elektrowerkzeug nach Anspruch 9, wobei das Erfassungsmodul anhand dessen, ob sich der Pegel des Kommunikationsanschlusses ändert, bestimmt, ob sich der erste Stromkreis im eingeschalteten oder im ausgeschalteten Zustand befindet.

11. Elektrowerkzeug nach Anspruch 10, wobei das Erfassungsmodul ferner in der Lage ist, einen Phasenstrom des Motors zu erfassen und anhand einer Größe des Phasenstroms des Motors zu bestimmen, ob sich der erste Stromkreis im eingeschalteten oder im ausgeschalteten Zustand befindet.

12. Elektrowerkzeug nach Anspruch 9, wobei das Erfassungsmodul ferner in der Lage ist, einen Phasenstrom des Motors zu erfassen, und wobei das Erfassungsmodul dazu konfiguriert ist, wenn ein Absolutwert des Phasenstroms des Motors kleiner als ein voreingestellter Stromschwellenwert ist und sich der Pegel des Kommunikationsanschlusses innerhalb einer zweiten voreingestellten Zeit nicht ändert, zu bestimmen, dass sich der erste Stromkreis im ausgeschalteten Zustand befindet.

13. Elektrowerkzeug nach Anspruch 1, wobei das Erfassungsmodul ferner in der Lage ist, eine Gegen-EMK des Motors sowie eine Zwischenkreisspannung des Motors zu erfassen und dazu konfiguriert ist, wenn eine Differenz zwischen der Gegen-EMK des Motors und der Zwischenkreisspannung des Motors innerhalb einer dritten voreingestellten Zeit kleiner als ein voreingestellter Spannungsschwellenwert ist, zu bestimmen, dass sich der erste Stromkreis im ausgeschalteten Zustand befindet.

14. Elektrowerkzeug nach Anspruch 1, wobei das Batteriepaket mit dem Elektrowerkzeug verbunden ist, wobei sich der erste Stromkreis im eingeschalteten Zustand befindet, wenn das Batteriepaket mit dem Elektrowerkzeug verbunden ist, und wobei sich der erste Stromkreis im ausgeschalteten Zustand befindet, wenn das Batteriepaket vom Elektrowerkzeug getrennt ist.

## Revendications

1. Outil électrique (1), comprenant :
un moteur (140) ;
une borne d'alimentation (110) configurée pour accéder à une source d'alimentation d'un bloc-batterie (2) ;
un module de détection (120) apte à détecter si un premier circuit (101) entre la borne d'alimentation et le bloc-batterie est dans un mode sous tension ou hors tension ; et
une unité de commande (130) apte à commander un second circuit (102) entre la borne d'alimentation et le moteur pour être dans un mode sous tension ou hors tension ;
l'unité de commande étant configurée pour, lorsque le module de détection détecte que le premier circuit passe du mode sous tension au mode hors tension, commander le second circuit pour qu'il passe en mode hors tension dans un premier délai prédéfini,
**caractérisé en ce que**
le premier délai prédéfini est supérieur ou égal à un temps de roue libre du moteur, le temps de roue libre étant la période pendant laquelle le moteur ne s'arrête pas immédiatement mais continue de tourner sous l'effet de l'inertie après l'arrêt de l'alimentation.

2. L'outil électrique selon la revendication 1, dans lequel l'unité de commande est configurée pour, lorsque le module de détection détecte, dans le premier délai prédéfini, que le premier circuit est à nouveau en mode sous tension, commander le second circuit pour qu'il passe en mode hors tension dans le premier délai prédéfini.

3. L'outil électrique selon la revendication 2, dans lequel l'unité de commande est configurée pour, lorsque le module de détection détecte, hors du premier délai prédéfini, que le premier circuit est en mode sous tension, commander le second circuit pour qu'il passe en mode sous tension.

4. L'outil électrique selon la revendication 1, comprenant en outre un interrupteur de commande (150) apte à commander le second circuit pour qu'il passe en mode sous tension ou hors tension, l'unité de commande commandant le second circuit pour qu'il passe en mode hors tension lorsque l'interrupteur de commande est en position arrêt.

5. L'outil électrique selon la revendication 1, comprenant en outre un interrupteur de commande (150) apte à commander le second circuit pour qu'il passe en mode sous tension ou hors tension, le second circuit étant en mode hors tension lorsque l'interrupteur de commande est en position arrêt, et l'unité de commande commandant le second circuit pour qu'il passe en mode sous tension ou hors tension lorsque l'interrupteur de commande est en position marche.

6. L'outil électrique selon la revendication 4 ou 5, dans lequel l'unité de commande est configurée pour, lorsque l'interrupteur de commande est en position marche dans le premier délai prédéfini et que le module de détection détecte, dans le premier délai prédéfini, que le premier circuit est à nouveau en mode sous tension, commander le second circuit pour qu'il passe en mode hors tension dans le premier délai prédéfini.

7. L'outil électrique selon la revendication 6, dans lequel l'unité de commande est configurée pour, lorsque l'interrupteur de commande est en position marche hors du premier délai prédéfini et que le module de détection détecte, hors du premier délai prédéfini, que le premier circuit est en mode sous tension, commander le second circuit pour qu'il passe en mode sous tension.

8. L'outil électrique selon la revendication 4 ou 5, dans lequel l'unité de commande est configurée pour, lorsque l'interrupteur de commande est commuté de la position arrêt à la position marche dans le premier délai prédéfini et que le module de détection détecte, dans le premier délai prédéfini, que le premier circuit est à nouveau en mode sous tension, commander le second circuit pour qu'il passe en mode hors tension dans le premier délai prédéfini.

9. L'outil électrique selon la revendication 1, comprenant en outre une borne de communication (160) configurée pour réaliser une communication de données avec le bloc-batterie, le module de détection étant apte à détecter si un niveau de la borne de communication varie.

10. L'outil électrique selon la revendication 9, dans lequel le module de détection détermine, en fonction de la variation du niveau de la borne de communication, si le premier circuit est en mode sous tension ou hors tension.

11. L'outil électrique selon la revendication 10, dans lequel le module de détection est également apte à détecter un courant de phase du moteur et à déterminer, en fonction de l'intensité du courant de phase du moteur, si le premier circuit est en mode sous tension ou hors tension.

12. L'outil électrique selon la revendication 9, dans lequel le module de détection est également apte à détecter un courant de phase du moteur, et est configuré pour, lorsque la valeur absolue du courant de phase du moteur est inférieure à un seuil de courant prédéfini et que le niveau de la borne de communication ne varie pas dans un second délai prédéfini, déterminer que le premier circuit est en mode hors tension.

13. L'outil électrique selon la revendication 1, dans lequel le module de détection est également apte à détecter une force électromotrice inverse du moteur et une tension de bus du moteur, et est configuré pour, lorsqu'une différence entre la force électromotrice inverse du moteur et la tension de bus du moteur est inférieure à un seuil de tension prédéfini dans un troisième délai prédéfini, déterminer que le premier circuit est en mode hors tension.

14. L'outil électrique selon la revendication 1, dans lequel le bloc-batterie est connecté à l'outil électrique, le premier circuit étant en mode sous tension lorsque le bloc-batterie est connecté à l'outil électrique, et le premier circuit étant en mode hors tension lorsque le bloc-batterie est déconnecté de l'outil électrique.
